# EUROPEAN PATENT SPECIFICATION

(11) **EP 3 406 911 B1**
(45) Date of publication and mention of the grant of the patent: **19.04.2023**
(21) Application number: 17741323.4
(22) Date of filing: 13.01.2017
(51) Int. Cl.: F04D 29/28, F04D 29/62, F24F 1/00, B29C 45/00, F04D 29/02

(54) **CENTRIFUGAL FAN, AND AIR CONDITIONER PROVIDED WITH CENTRIFUGAL FAN**
ZENTRIFUGALGEBLÄSE UND MIT DEM ZENTRIFUGALGEBLÄSE AUSGESTATTETE KLIMAANLAGE
VENTILATEUR CENTRIFUGE, ET CLIMATISEUR COMPORTANT UN VENTILATEUR CENTRIFUGE

(30) Priority: 18.01.2016 JP 2016007187
(43) Date of publication of application: 28.11.2018
(73) Proprietor: Daikin Industries, Ltd., Osaka-shi, Osaka 530-0001 (JP)
(72) Inventor: KASHIHARA, Takashi, Osaka 530-8323 (JP); YAMASAKI, Takahiro, Osaka 530-8323 (JP)
(74) Representative: Hoffmann Eitle
(86) International application number: PCT/JP2017/001107
(87) International publication number: WO 2017/126445

(56) References cited:
- EP-A1- 1 688 623
- EP-A1- 3 399 195
- WO-A1-2014/054175
- CN-Y- 201 103 564
- JP-A- 2002 240 105
- JP-A- 2008 215 324
- JP-A- 2014 009 788
- JP-A- 2014 077 380
- JP-A- 2015 086 827

## Description

### TECHNICAL FIELD

The present invention relates to a centrifugal fan and an air conditioner provided with the same.

### BACKGROUND ART

Conventionally, a centrifugal fan is used as a blower for generating an air flow in an air conditioner or the like as disclosed in, for example, JP 2010 216486 A. An impeller of the centrifugal fan mainly includes a plurality of vanes arranged annularly around a rotational axis, and a main plate and a shroud disposed facing each other across the two vane shaft end portions which are both end portions on the rotational axis direction side of the vane.

In JP 2010 216486 A, the main plate and the vanes are integrally molded with a resin, and a flow leader is formed on the main plate. In the main plate, a resin injection port into which the resin is injected at the time of molding, and a flow path of the resin injected from the resin injection port are formed. The flow leader is formed as a rib having a wall thickness that is larger than that of the other portions to thereby play the role of enhancing the strength of the main plate. Further relevant prior art may be found in EP 1688623 A1 and EP 3399195 A1, which relate to impellers of a centrifugal fan.

### SUMMARY OF THE INVENTION

### <Technical Problem>

Here, centrifugal forces act on the vanes rotating in conjunction with the motor during an operation of the centrifugal fan cause stress to occur in a portion of the main plate continuing to the connecting portion with the vane. Given this situation, it is assumed that drawbacks such as cracks will occur and cause damage to such portions. In addition, it is conceivable that damage may also occur to this portion even when an impact is applied to the direction parallel to the rotation axis at the time of an operation such as transportation.

In the centrifugal fan disclosed in JP 2010 216486 A, a hollow structure vane is formed integrally with the main plate, and when viewed from the direction of the rotational axis, a flow leader that plays a role of enhancing the strength of the main plate is formed so as to surround the outer portion of the vane. That is to say, in the main plate, the wall thickness of the portion overlapping with the central part of the vane as viewed from the direction of the rotational axis is not particularly formed thick compared with the other portions. In other words, in JP 2010 216486 A, it is conceivable that the strength of the portion of the main plate where stress is assumed to occur at large during operation or the like has not been sufficiently secured.

Thus, in the centrifugal fan disclosed in JP 2010 216486 A, when a load is applied during operation, transportation, or the like, such a part may be damaged. That is, the strength of the main plate is not sufficiently secured and the reliability is not sufficiently ensured.

On the other hand, increasing the thickness in a majority of the main plate for the purpose of enhancing the strength thereof increases the amount of resin used at the time of molding which leads to an increase in manufacturing costs.

The present invention has been made in order to accomplish an objective of providing a centrifugal fan excellent in reliability while restraining an increase in cost, or an air conditioner including such a centrifugal fan.

### <Solution to Problem>

A centrifugal fan according to the present invention is defined by claim 1. The centrifugal fan includes a main plate and a plurality of vanes. The main plate is formed with resin. The main plate is configured and arranged annular as viewed from the direction of the rotational axis. The plurality of vanes is coupled to the main surface of the main plate. The plurality of vanes is arranged annularly around the rotational axis. The main plate includes a plurality of gates and a plurality of flow leaders. Each gate is a section into which resin is injected during molding. Each flow leader is a section that is configured and arranged to function as a flow path of the resin injected into the corresponding gate. Viewed from the direction of the rotational axis, each of the flow leaders is configured and arranged to extend from the corresponding gate to the central part of the nearest vane. The central part of the vane is the portion which overlaps with the center of gravity of the vane when viewed from the direction of the rotational axis.

Each of the flow leaders extends from the corresponding gate to the central part of nearest vane as viewed from the direction of the rotational axis. Therefore, in the main plate, the wall thickness of the portion overlapping with the central part of the vane as viewed from the direction of the rotational axis is made larger than that of the other portions. As a result, the strength of the portion overlapping the central part of the vane as viewed from the direction of the rotational axis is enhanced in the main plate; that is, the portion where stress is assumed to occur at large during operation or the like. Thus, damage to this portion is decreased when a load is applied during operation, transportation or the like.

Furthermore, in the main plate, it is possible to increase the strength only in the portion where stress is assumed to largely occur during an operation or the like. That is, in view of the strength enhancement, with respect to a portion where it is not necessary to increase the wall thickness, the wall thickness thereof may be reduced. Due to this, the amount of resin used at the time of molding to be restrained and to restrain an increase in cost.

As a result, the strength of the main plate is further enhanced and reliability is further improved while restraining an increase in cost.

As the central part of the vane is the portion which overlaps with the center of gravity of the vane when viewed from the direction of the rotational axis, in the main plate, the wall thickness of the portion overlapping with the center of gravity of the vane as viewed from the direction of the rotational axis is made larger than the other portions. As a result, the strength of the portion overlapping the center of gravity of the vane as viewed from the direction of the rotational axis is enhanced in the main plate; that is, the portion where stress is assumed to especially occur at large during operation or the like. Thus, damage to this portion is decreased when a load is applied during operation, transportation or the like.

Furthermore, in the main plate, it is possible to increase the strength only in the portion where stress is assumed to particularly occur at large during an operation or the like. Due to this, further restraining of the amount of resin used at the time of molding.

As a result, the strength of the main plate is further enhanced, and reliability is further improved, while restraining an increase in cost.

It is to be noted that the phrase "central part of the vane" here refers to the portion overlapping with an inner side than the outline of the vane as viewed from the direction of the rotational axis. In particular, it refers to the portion overlapping with the center of gravity of the vane or the portion around the center of gravity of the vane.

In addition, the "centrifugal fan" herein includes, for example, a turbofan or a sirocco fan.

According to some preferred embodiments, each of the flow leaders is configured and arranged to extend from the inside of the main plate to the outside thereof so as to exhibit a radial shape together with the other flow leaders. Viewed from the direction of the rotational axis, the gate is located near the center of the corresponding flow leader.

Due to this, the resin to flow evenly throughout the flow leader with ease, as compared with the case where the gates are arranged away from near the center of the flow leader, and therefore improving formability.

It is to be noted that the phrase "near the center of the flow leader" here refers to a portion that is near the intermediate position between both end portions than the inner end portion and the outer end portion of the flow leader when viewed from the direction of the rotational axis.

According to some preferred embodiments, the centrifugal fan is a turbofan. In the turbofan, the ratio of the vane length of the vane to the diameter of the main plate as viewed from the direction of the rotational axis is larger than that of a sirocco fan.

Thus, in a turbofan generally used in an air conditioner or the like, the strength of the main plate is enhanced and the reliability is improved, while restraining an increase in cost.

The invention also encompasses an air conditioner. The air conditioner includes the centrifugal fan according to any one of the described embodiments in accordance with the present invention. Thus, the reliability of the air conditioner is improved while the cost increase thereof is restrained.

It is to be noted that the term "air conditioner" here includes various devices installed in a target space to perform air conditioning such as indoor units and outdoor units of air conditioners, air purifiers, ventilation devices, dehumidifiers or the like.

### <Advantageous Effects of Invention>

In the centrifugal fan according to the present invention, the strength of the portion overlapping the central part of the vane as viewed from the direction of the rotational axis is enhanced in the main plate; that is, the portion where stress is assumed to largely occur during operation or the like. Thus, damage to this portion is decreased when a load is applied during an operation, transportation or the like. Furthermore, in view of the strength enhancement, with respect to a portion where it is not necessary to increase the wall thickness, the wall thickness thereof may be reduced. Thus, the amount of resin used at the time of molding to be restrained and to restrain an increase in cost. As a result, the strength of the main plate is further enhanced and reliability is further improved, while restraining an increase in cost. The strength of the portion overlapping the center of gravity of the vane as viewed from the direction of the rotational axis is enhanced in the main plate; that is, the portion where stress is assumed to especially occur at large during operation or the like. Thus, damage to this portion is decreased when a load is applied during an operation, transportation or the like. Furthermore, in the main plate, it is possible to increase the strength only in the portion where stress is assumed to particularly occur at large during an operation or the like. Due to this, further restraining of the amount of resin used at the time of molding.

In the centrifugal fan according to some preferred embodiments, resin flows evenly throughout the flow leader with ease, as compared with the case where the gates are arranged away from near of the center of the flow leader, and therefore formability is improved.

In the centrifugal fan according to some preferred embodiments, while restraining an increase in the cost of the turbofan generally used in a device such as an air conditioner, the strength of the main plate is enhanced and the reliability is improved.

In the air conditioner according to the present invention, the reliability of the air conditioner is improved while the increase in cost is restrained.

### BRIEF DESCRIPTION OF THE DRAWINGS

FIG. 1 is a perspective view illustrating the external appearance of an air conditioning indoor unit according to one exemplary embodiment of the present invention (the illustration of a ceiling is omitted).
FIG. 2 is schematic diagram illustrating a side sectional view of the air conditioning indoor unit.
FIG. 3 is a perspective view illustrating the external appearance of an impeller of the centrifugal fan according to one exemplary embodiment of the present invention.
FIG. 4 is a view as seen in the direction of the arrow A in FIG. 3.
FIG. 5 is a view as seen in the direction of the arrow B in FIG. 3.
FIG. 6 is an enlarged view of a portion C enclosed by a dashed line in FIG. 4.
FIG. 7 is an enlarged view of a portion D enclosed by a dashed line in FIG. 5.
FIG. 8 is a diagram illustrating a cross-sectional view taken along the line VIII-VIII in FIGS. 6 and 7.
FIG. 9 is a diagram illustrating a cross-sectional view taken along the line IX - IX and a cross-sectional view taken along the line IX' - IX' of FIG. 7.
FIG. 10 is a diagram illustrating a cross-sectional view taken along the line X - X and a cross-sectional view taken along the line X' - X' of FIG. 7.
FIG. 11 is an enlarged cross-sectional view of a portion E enclosed by a dashed line in FIG. 7 as viewed from the positive pressure surface side.
FIG. 12 is a diagram illustrating a cross-sectional view taken along line XII - XII of FIG. 6.
FIG. 13 is a schematic diagram illustrating a state in which the air flowing in the space inside a blade swirls.
FIG. 14 is an enlarged view of a portion indicated by the two-dot chain line XIV in FIG. 3.
FIG. 15 is an enlarged view of a portion indicated by the two-dot chain line XV in FIG. 14.

### DESCRIPTION OF EMBODIMENTS

Hereinafter, a centrifugal fan 4 and an air conditioning indoor unit 1 (air conditioner) according to one exemplary embodiment of the present invention will be described. Note that the following embodiments are specific examples of the present invention and do not limit the technical scope of the present invention and can be appropriately changed without departing from the gist of the present invention.

### (1) Air Conditioning Indoor Unit 1

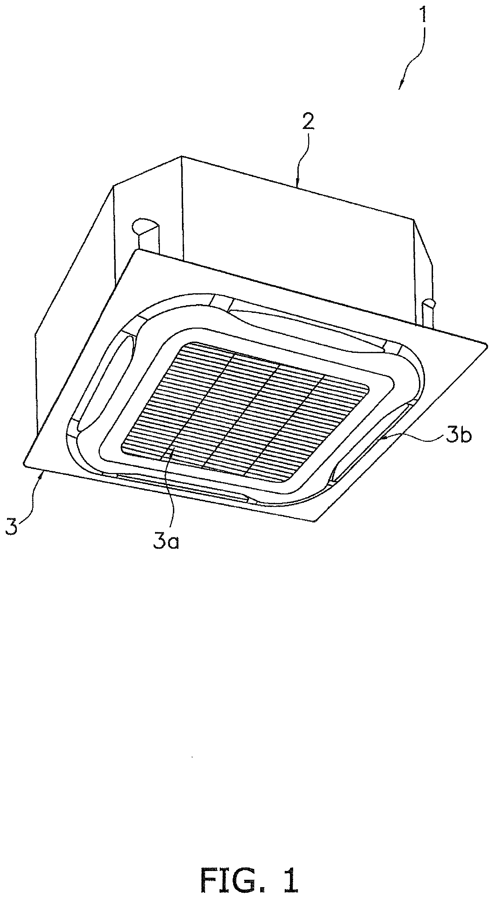

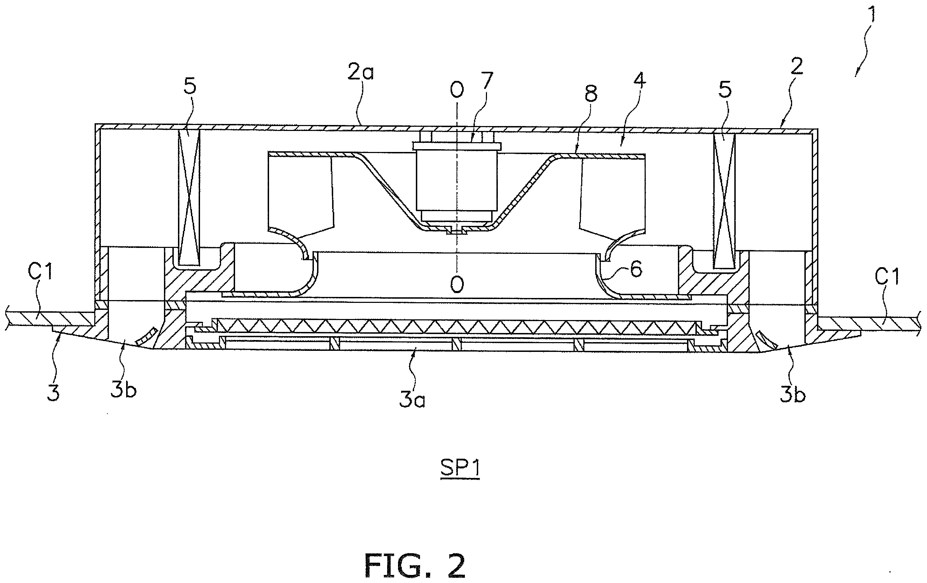

FIG. 1 is a perspective view illustrating the external appearance of the air conditioning indoor unit 1 according to one exemplary embodiment of the present invention (the illustration of a ceiling C1 is omitted). FIG. 2 is schematic diagram illustrating a side sectional view of the air conditioning indoor unit 1.

Here, the air conditioning indoor unit 1 is a ceiling-embedded type air conditioner, and mainly includes a casing 2 that houses various constituent devices therein and a decorative panel 3 that is disposed on the underside of the casing 2. Note that the air conditioning indoor unit 1 is, but not limited to a ceiling installation type, but may be another type, for example, a ceiling-suspended type which is suspended without being embedded in the ceiling C1, a floor-standing type placed on a floor surface and installed thereon, or a wallmounted type fixedly installed on the inner wall or the like.

The casing 2 of the air conditioning indoor unit 1 is a box-shaped member whose bottom surface is opened. As shown in FIG. 2, the casing 2 is inserted and installed in an opening formed in the ceiling C1 of a target space SP1 where the air conditioning indoor unit 1 is installed.

The decorative panel 3 is installed so as to be fitted into the opening of the ceiling C1. The decorative panel 3 has a suction port 3a formed in the central portion for sucking the air of the target space SP 1 into the casing 2, and a blowout port 3b for blowing air from the casing 2 to the target space SP1 is formed surrounding the outer periphery of the suction port 3 a.

The air conditioning indoor unit 1 mainly includes, in the casing 2, a centrifugal fan 4 for drawing the air of the target space SP1 into the casing 2 through the suction port 3a of the decorative panel 3 and blowing it out in the peripheral direction, a heat exchanger 5 surrounding the outer periphery of the centrifugal fan 4, and a bell mouth 6 for guiding the air drawn from the suction port 3a to the centrifugal fan 4.

In the present exemplary embodiment, the centrifugal fan 4 is a turbofan in which the ratio of the vane length of the vane to the diameter of the main plate viewed from the direction of the rotational axis is larger than that of a sirocco fan. The centrifugal fan 4 has a fan motor 7 provided substantially at the center of a top plate 2a of the casing 2 and an impeller 8 connected to the fan motor 7 and rotationally driven.

### (2) Configuration of Impeller 8 of the Centrifugal Fan 4

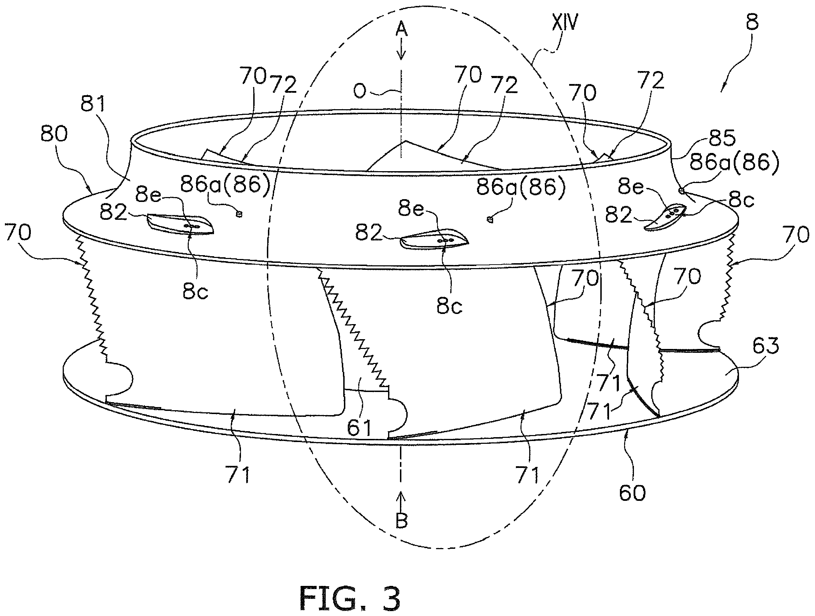

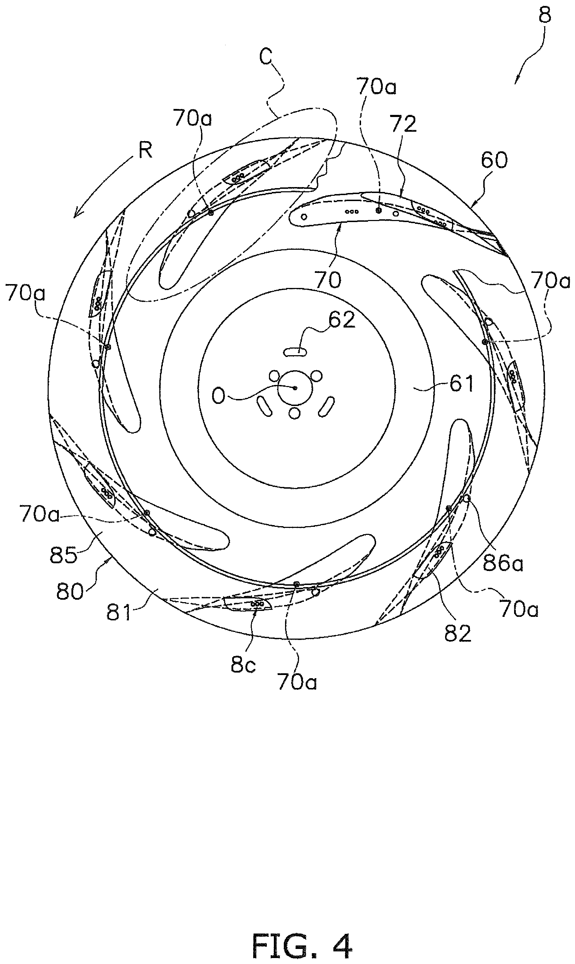

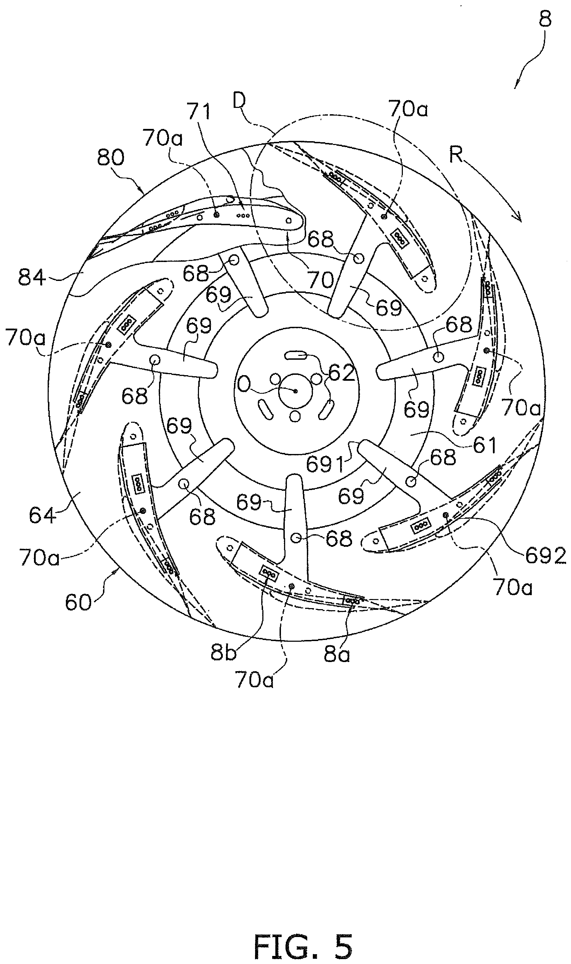

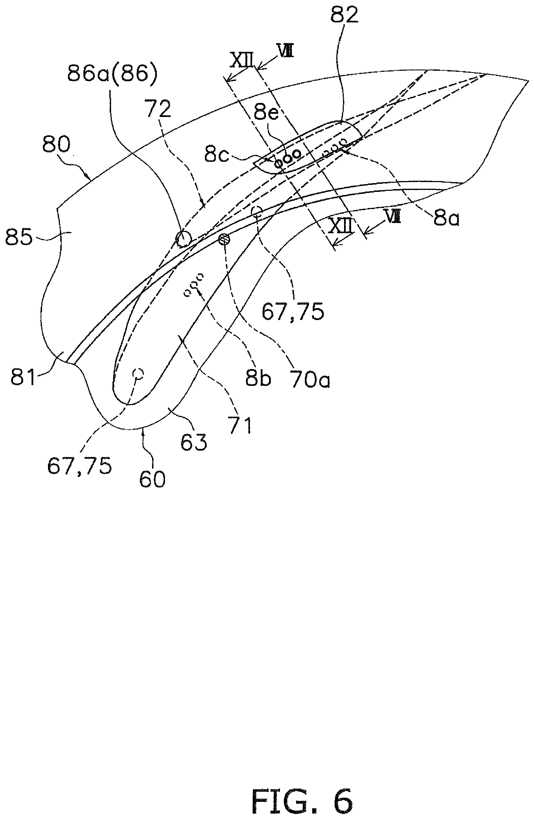

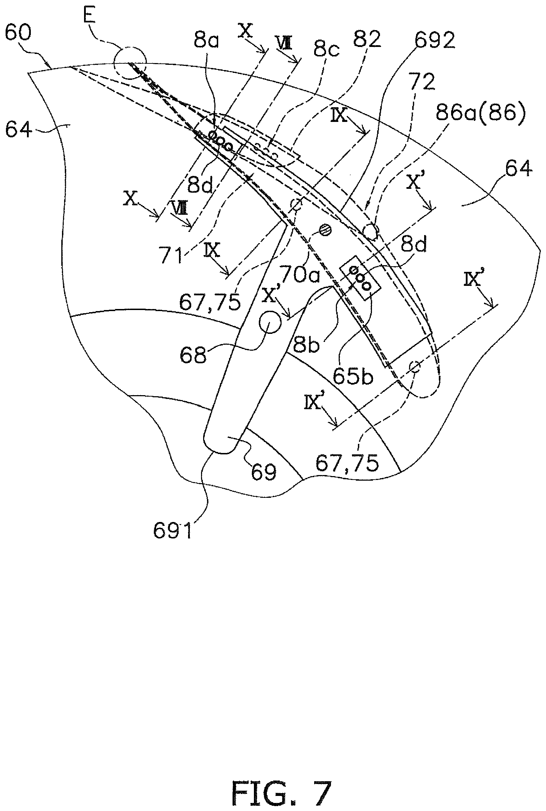

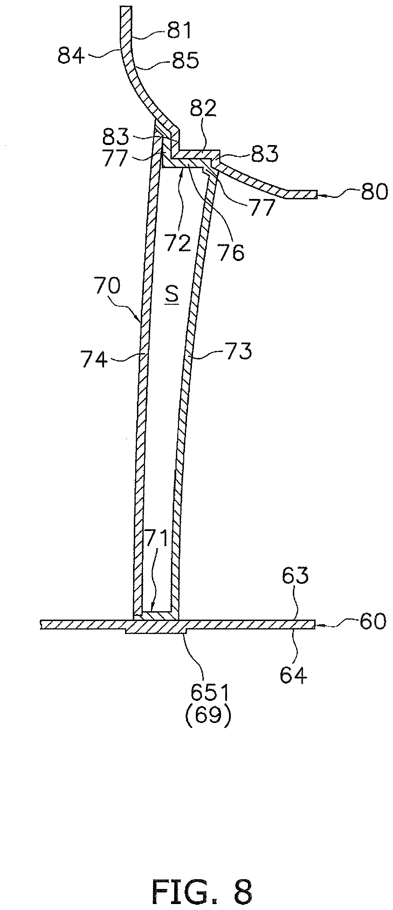

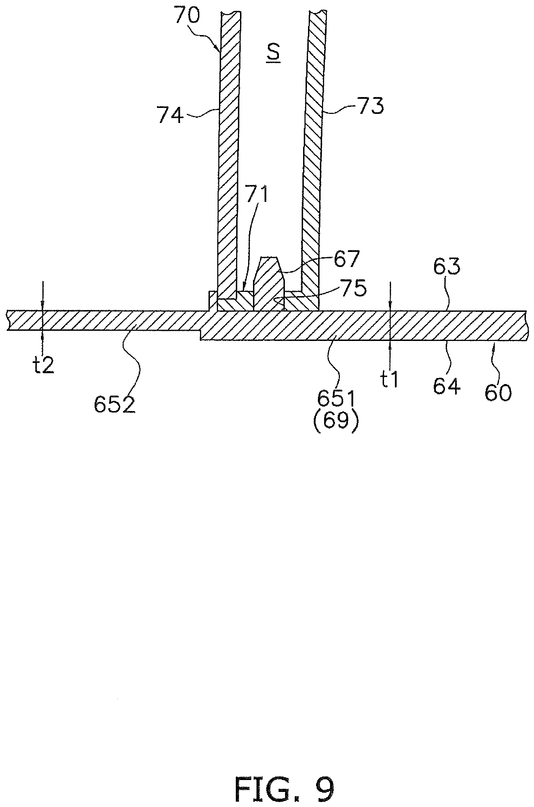

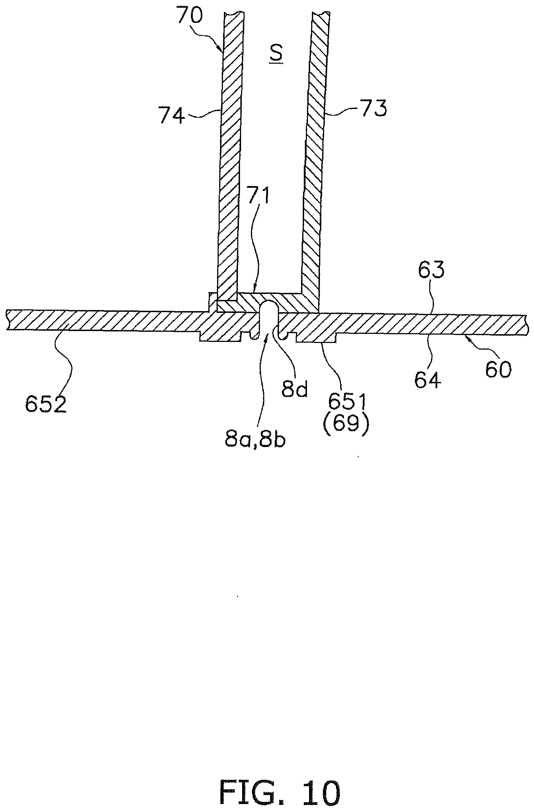

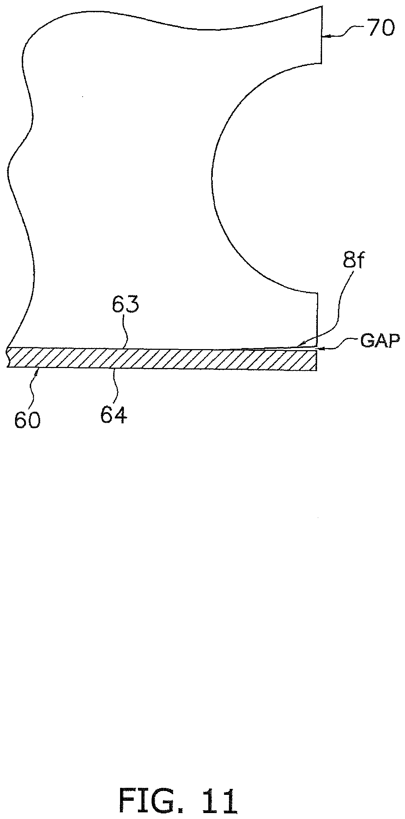

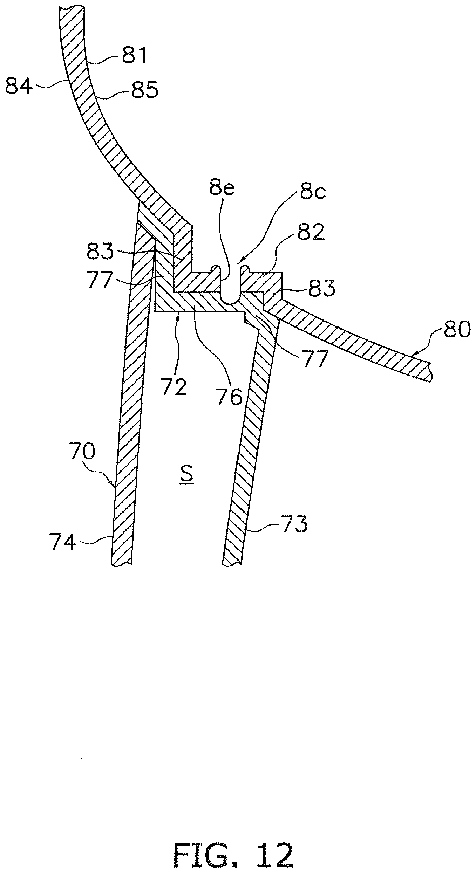

FIG. 3 is a perspective view illustrating the external appearance of the impeller 8 of the centrifugal fan 4 according to one exemplary embodiment of the present invention. FIG. 4 is a view as seen in the direction of the arrow A in FIG. 3. FIG. 5 is a view as seen in the direction of the arrow B in FIG. 3. FIG. 6 is an enlarged view of a portion C enclosed by a dashed line in FIG. 4. FIG. 7 is an enlarged view of a portion D enclosed by a dashed line in FIG. 5. FIG. 8 is a diagram illustrating a cross-sectional view taken along the line VIII - VIII in FIGS. 6 and 7. FIG. 9 is a diagram illustrating a cross-sectional view taken along the line IX - IX and a cross-sectional view taken along the line IX'- IX' of FIG. 7. FIG. 10 is a diagram illustrating a cross-sectional view taken along the line X - X and a cross-sectional view taken along the line X' - X' of FIG. 7. FIG. 11 is an enlarged cross-sectional view of a portion E surrounded by a dashed line in FIG. 7 as viewed from the positive pressure surface side. FIG. 12 is a diagram illustrating a cross-sectional view taken along line XII - XII of FIG. 6. Note that the arrow "R" in FIGS. 4 and 5 indicates the direction of rotation of the impeller 8. Further, in FIGS. 4 to 7, a hatching portion "70a" indicates the center of gravity of the blade 70.

The impeller 8 mainly includes a main plate 60 connected to the fan motor 7, a plurality of blades 70 (vane) (seven, in this case) arranged annularly around the rotational axis O on the side opposite to the fan motor 7 of the main plate 60, and an annular shroud 80 disposed facing the main plate 60 so that the plurality of blades 70 are sandwiched therebetween.

### (2-1) Main plate 60

The main plate 60 is a plate-shaped member made of resin which is molded using a molding die. Note that the resin material composing the main plate 60 is, for example, a thermoplastic resin such as ABS or ASG. However, a configuration may be adopted in which other resin is used.

The main plate 60 is provided with a hub portion 61 in its center portion. The hub portion 61 is a substantially conical shape portion protruding toward the side of the suction port 3a. The main plate 60 has a hat shape when viewed from a direction intersecting with the rotational axis O, and has an annular shape when viewed from the direction of the rotational axis O.

A plurality of cooling air holes 62 (three in this case) for taking in air to cool the fan motor 7 is formed in the hub portion 61 of the main plate 60 (refer to FIG. 5). The cooling air holes 62 are arranged alongside each other on the concentric circle of the main plate 60. Note that the number of the cooling air holes 62 can be appropriately changed according to design specifications.

The main plate 60 has a blade-side main plate surface 63 which is a main surface on the blade 70 side (a surface facing the shroud 80) and a counter-blade-side main plate surface 64 which is a main surface on the opposite side to the rotational axis O direction of the blade-side main plate surface 63 (refer to FIGS. 8 and 9).

### (2-2) Blade 70

The blade 70 is a resin member molded using a molding die; the molding is separately performed for that of the main plate 60 and the shroud 80. The resin material composing the blade 70 is not particularly limited; but here, the same resin material as the main plate 60 and the shroud 80 is used. One end portion of the blade 70 on the rotational axis O direction side is a main-plate-side blade shaft end portion 71 arranged to face the main plate 60 and is fixed (coupled) to the main plate 60. The other end portion of the blade 70 on the rotational axis O direction side is a shroud-side blade shaft end portion 72 arranged to face the shroud 80 and is fixed (coupled) to the shroud 80.

When viewing the impeller 8 along the direction of the rotational axis O, the blade 70 has a vane shape in which the main-plate-side blade shaft end portion 71 is inclined rearward than the shroud-side blade shaft end portion 72, so that the main-plate-side blade shaft end portion 71 and the shroud-side blade shaft end portion 72 are formed so as to intersect each other. In other words, the blade 70 exhibits a three-dimensional vane shape extending in the direction of the rotational axis O while twisting between the main plate 60 and the shroud 80.

The blade 70 has a hollow structure. More specifically, the blade 70 is formed by joining together a blade main body 73 and a blade lid body 74, whereby a hollow space S is formed inside (see FIGS. 8 and 9). By configuring this hollow as described above, a reduction in the weight of the blade 70 is realized. Note that the hollowing of the blade 70 is, but not based on the fitting structure of the two members (the blade main body 73 and the blade lid body 74), but may be formed by blow molding or the like.

### (2-3) Shroud 80

The shroud 80 is a bell-shaped resin member projecting from its outer peripheral portion toward the opening at the center portion as it curves toward the suction port 3a side. The resin material forming the shroud 80 is not particularly limited; however, the same resin material as the main plate 60 is used here. In this embodiment, the portion forming the bell shape of the shroud 80 is referred to as a shroud curved plate portion 81.

The shroud 80 includes a blade-side shroud surface 84 which is a surface on the side of the blade 70 (that is, the surface facing the main plate 60), and a counter-blade-side shroud surface 85 which is a surface on the opposite side of the blade-side shroud surface 84 in the direction of the rotational axis O (refer to FIG. 8 and FIG. 12).

### (2-4) Connection Mode of Main Plate 60 and Blade 70

The main-plate-side blade shaft end portion 71 of the blade 70 is fixed (coupled) to the main plate 60 by welding the main-plate-side blade shaft end part 71 and the main plate 60 to each other.

On the main plate 60 and the blade 70, there are provided a first main-plate-side welding portion 8a and a second main-plate-side welding portion 8b which are the welded portions between the main plate 60 and the main-plate-side blade shaft end portion 71 (refer to FIG. 7). The first main-plate-side welding portion 8a is disposed corresponding to a portion of the main-plate-side blade shaft end portion 71 near the blade trailing edge in the blade length direction. The second main-plate-side welding portion 8b is disposed corresponding to a portion of the main-plate-side blade shaft end portion 71 near the blade front edge in the blade length direction.

A main-plate-side welding hole 8d which is a depression penetrating the main plate 60 and reaching a part of the main-plate-side blade shaft end portion 71 is formed on the first main-plate-side welding portion 8a and the second main-plate-side welding portion 8b, respectively (refer to FIG. 7). A plurality of the main-plate-side welding holes 8d (three, in this case) are formed on the first main-plate-side welding portion 8a and the second main-plate-side welding portion 8b, respectively, along the blade length direction of the main-plate-side blade shaft end portion 71. Note that a configuration may be adopted in which welded portions between the main-plate-side blade shaft end portion 71 and the main plate 60 are formed on the main plate 60 and the blade 70 in addition to the first main-plate-side welding portion 8a and the second main-plate-side welding portion 8b. The number of the main-plate-side welding hole 8d is, but not limited to three, and may be appropriately changed according to design specifications.

A convex rib 651 corresponding to the main-plate-side blade shaft end portion 71 is formed on the counter-blade-side main plate surface 64 of the main plate 60 (refer to FIGS. 8 to 10). In the main plate 60, a thickness t1 (plate thickness) of the rib 651 (that is, the portion corresponding to the main-plate-side blade shaft end portion 71 of the main plate 60) is larger than a thickness t2 of a surrounding thin portion 652. Note that the first main-plate-side welding portion 8a and the second main-plate-side welding portion 8b are disposed in the thin portion 652.

On the main-plate-side blade shaft end portion 71, at a portion closer to the blade trailing edge side of the blade 70 than the first main-plate-side welding portion 8a, a non-welded portion 8f for securing a gap is formed between the main-plate-side blade shaft end portion 71 and the main plate 60 (refer to FIG. 11).

A main plate protrusion 67 protruding from the blade-side main plate surface 63 of the main plate 60 toward the shroud 80 side is formed in a portion of the main plate 60 facing the main-plate-side blade shaft end portion 71 (refer to FIGS. 6 ,7 and 9). A main plate side blade hole 75 that can be inserted into the main plate protrusion 67 is formed on the main-plate-side blade shaft end portion 71 of the blade 70.

Here, there are two sets of the main plate protrusion 67 and the main-plate-side blade hole 75: one set is disposed at a portion on the blade front edge side part of the blade 70 than at the second main-plate-side welding portion 8b; whereas the other set is disposed at a portion between the first main-plate-side welding portion 8a and the second main-plate-side welding portion 8b in the blade length direction. That is, the blade 70 is positioned at a predetermined position of the main plate 60 by the main plate protrusion 67 and the main-plate-side blade hole 75. It is to be noted that the number of sets of the main plate protrusion 67 and the main-plate-side blade hole 75 is, but is not limited to two.

### (2-5) Connection Mode of Shroud 80 and Blade 70

The fixing (coupling) of the shroud-side blade shaft end portion 72 of the blade 70 to the shroud 80 is the same as the fixing of the main-plate-side blade shaft end portion 71 to the main plate 60; that is, welding the shroud-side blade shaft end portion 72 and the shroud 80 to each other and the part welded forms a shroud-side welding portion 8c. Similarly to the first main-plate-side welding portion 8a and the second main-plate-side welding portion 8b, the shroud-side welding portion 8c is provided with a shroud-side welding hole 8e which is a depression penetrating the shroud 80 and reaching the shroud-side blade shaft end portion 72 (refer to FIGS. 6 and 12).

A plurality of shroud-side welding holes 8e (three, in this case) are formed along the blade length direction of the shroud-side blade shaft end portion 72. Note that a configuration may be adopted in which other welded portions with the shroud 80 in addition to the shroud-side welding portion 8c are formed in the blade 70 and the shroud 80. Furthermore, the number of the shroud-side welding holes 8e is, but not limited to three, and may be appropriately changed.

In the shroud 80, a shroud flat plate portion 82 which is flat shape is formed corresponding to the shroud-side blade shaft end portion 72, and the shroud-side welding portion 8c is disposed on the shroud flat plate portion 82. In other words, most of the shroud 80 is constituted by the bell-shaped shroud curved plate portions 81. However, the shroud flat plate portion 82 having a flat plate shape and perpendicular to the direction of the rotational axis O is formed in a portion of the shroud curved plate portion 81 that is corresponding to the shroud-side blade shaft end portion 72.

On the shroud-side blade shaft end portion 72 of the blade 70, a shroud side blade flat plate portion 76 perpendicular to the direction of the rotational axis O is formed corresponding to the shroud flat plate portion 82. The shroud side blade flat plate portion 76 is formed so as to overlap the shroud flat plate portion 82 in the direction of the rotational axis O. Thus, in this overlapping portion, the shroud-side welding hole 8e penetrates the shroud flat plate portion 82 and reaches the shroud side blade flat plate portion 76.

In this configuration, the shroud flat plate portion 82 is disposed with the purpose to correspond near the center in the blade length direction of the shroud-side blade shaft end portion 72. Therefore, the shroud side blade flat plate portion 76 is also disposed near the center in the blade length direction of the shroud-side blade shaft end portion 72.

Furthermore, the shroud flat plate portion 82 is disposed to face the direction of the rotational axis O of the first main-plate-side welding portion 8a. That is to say, when viewing the first main-plate-side welding portion 8a along the direction of the rotational axis O, the shroud flat plate portion 82 is disposed at a position closest to the first main-plate-side welding portion 8a in the section where the shroud flat plate portion 82 overlaps with the shroud-side blade shaft end portion 72 in the direction of the rotational axis O. In this case, the shroud flat plate portion 82 is disposed at a position corresponding to the vicinity of the center in the blade length direction of the shroud-side blade shaft end portion 72.

It is to be noted that the shroud flat plate portion 82 is disposed to face the first main-plate-side welding portion 8a in the direction of the rotational axis O; however, the present invention is not limited thereto. The shroud flat plate portion 82 may be disposed so as to be opposed to the direction of the rotational axis O of the second main-plate-side welding portion 8b in accordance with the arrangement of the first main-plate-side welding portion 8a and the second main-plate-side welding portion 8b.

On the counter-blade-side shroud surface 85 of the shroud 80, a shroud flat surface 86a having a flat surface is formed facing the direction of the rotational axis O of the second main-plate-side welding portion 8b (refer to FIG. 6). When the second main-plate-side welding portion 8b is viewed along the rotational axis O direction, the shroud flat surface 86a is located at a position closest to the second main-plate-side welding portion 8b in the portion overlapping with the shroud-side blade shaft end portion 72 of the shroud 80 in the direction of the rotational axis O. In this case, the shroud flat surface 86a is disposed at a position corresponding to the blade front edge portion in the blade length direction of the shroud-side blade shaft end portion 72. The shroud flat surface 86a is an end face of a shroud protrusion 86 in the direction of the rotational axis O, wherein the shroud protrusion 86 protrudes in the direction of the rotational axis O from a position corresponding to the blade front edge portion in the blade length direction of the shroud-side blade shaft end portion 72 in the shroud curved plate portion 81. The shroud flat surface 86a is a flat surface perpendicular to the rotational axis O direction.

Although the shroud flat surface 86a is disposed so as to face the direction of the rotational axis O of the second main-plate-side welding portion 8b, the present invention is not limited thereto. A configuration may be adopted in which the shroud flat surface 86a is disposed so as to face the direction of the rotational axis O of the first main-plate-side welding portion 8a in accordance with the arrangement of the first main-plate-side welding portion 8a and the second main-plate-side welding portion 8b.

In the shroud 80, a shroud stepped portion 83 is formed at the peripheral portion of the shroud flat plate portion 82 to connect the shroud curved plate portion 81 thereto, and on the shroud-side blade shaft end portion 72, a blade stepped portion 77 that can be fitted to the shroud stepped portion 83 is formed around the peripheral portion of the shroud side blade flat plate portion 76 (refer to FIGS. 8 and 12). The blade stepped portion 77 is fitted to the shroud stepped portion 83 in a state where the shroud flat plate portion 82 and the shroud side blade flat plate portion 76 overlap in the direction of the rotational axis O. In other words, the blade 70 is positioned at a predetermined position of the shroud 80 by the shroud stepped portion 83 and the blade stepped portion 77.

### (3) Manufacturing Process of the Impeller 8

First, the blade main body 73 and the blade lid body 74, which are both resin molded, are fitted together to assemble the blade 70. The main plate 60 and the shroud 80, which are both resin molded, and the plurality of blades 70 are temporarily assembled. Here, the main plate protrusion 67 of the main plate 60 is inserted into the main-plate-side blade hole 75 of the main-plate-side blade shaft end portion 71 of the blade 70, thereby disposing the blade 70 at a predetermined position of the main plate 60. Furthermore, the blade stepped portion 77 of the shroud-side blade shaft end portion 72 of the blade 70 is fitted to the shroud stepped portion 83 of the shroud 80 to thereby arrange the blade 70 at a predetermined position of the shroud 80.

Next, the plurality of blades 70, the main plate 60 and the shroud 80 (workpiece) that were temporarily assembled are placed on the rotary table of the impeller support device (not shown).

Next, the two blade shaft end portions of the plurality of blades 70 (that is, the main-plate-side blade shaft end portion 71 and the shroud-side blade shaft end portion 72), the main plate 60 and the shroud 80 are welded to each other. Here, the welding between the main-plate-side blade shaft end portion 71 and the main plate 60 and between the shroud-side blade shaft end portion 72 and the shroud 80 are performed one after another in succession for each of the plurality of blades 70.

For example, by applying ultrasonic vibration to the blade 70 and the main plate 60 with an ultrasonic horn (not shown), the first main-plate-side welding portion 8a including the main-plate-side welding hole 8d and the second main-plate-side welding portion 8b including the main-plate-side welding hole 8d are formed. In addition, the shroud-side welding portion 8c including the shroud-side welding hole 8e is formed by applying ultrasonic vibration to the blade 70 and the shroud 80 with the ultrasonic horn. It is to be noted that at this time (that is, when performing welding between any one of the plurality of blades 70 and the main plate 60 and the shroud 80), the shroud flat plate portion 82 and the shroud flat surface 86a (shroud protrusion 86) of the shroud 80 are pressed in the direction of the main plate 60 (the direction of the rotational axis O) by using a shroud pressing device having a plurality of pressing pins for pressing the shroud 80 toward the side of the main plate 60.

Next, when welding between all the blades 70 and the main plate 60 and the shroud 80 is not completed, the rotary table of the impeller support device is rotated to move to a position corresponding to the circumferentially adjacent blades 70. Then, the above process is repeated until the welding between all the blades 70 and the main plate 60 and the shroud 80 are completed.

### (4) Improvement of Formability and Strength of the Main Plate 60

In the centrifugal fan 4, the formability and strength of the main plate 60 are improved as compared with the conventional centrifugal fan. This will be discussed in greater detail below.

The main plate 60 is molded by injecting resin into a molding die. The counter-blade-side main surface 64 of the main plate 60 includes a plurality of gates 68. The gate 68 is a section corresponding to the injection port (injection port mark) when resin is injected into the molding die (that is, a section into which resin is injected at the time of molding) (refer to FIGS. 5 and 7). The counter-blade-side main plate surface 64 of the main plate 60 also includes the plurality of flow leaders 69 which are sections functioning as the flow path for resin injected into one of the gates 68 (refer to FIGS. 5 and 7). In the present embodiment, the number of the gates 68 and the flow leaders 69 included in the counter-blade-side main plate surface 64 is the same as the number of the blades 70 (that is, 7 pieces).

Each of the flow leaders 69 corresponds to one of the gates 68 on a one-to-one basis and is a section that functions as the flow path of the resin injected into the corresponding gate 68. Together with the other flow leaders 69, each of the flow leaders 69 extends outward from the inside of the main plate 60 so as to exhibit a radial shape when viewed from the direction of the rotational axis O. Here, the inner end portion (the end portion on the rotational axis O side) of each of the flow leaders 69 is referred to as an inner end portion 691, and the outer end portion (the end portion on the outer peripheral side) is referred to as an outer end portion 692 (refer to FIGS. 5 and 7).

The inner end portion 691 is located on the outer side of the cooling air hole 62 (the outer peripheral side of the main plate 60) in the hub portion 61 as viewed from the direction of the rotational axis O. The outer end portion 692 is located at a portion overlapping with the main-plate-side blade shaft end portion 71 of the blade 70 (more specifically, a portion on the outer peripheral side of a center of gravity 70a of the blade 70) as viewed from the direction of the rotational axis O.

When viewed from the direction of the rotational axis O, the gate 68 is located at an intermediate portion between the inner end portion 691 and the outer end portion 692 of the corresponding flow leader 69. More specifically, the gate 68 is located on the center portion of the corresponding flow leader 69 (to put it concretely, when viewed from the direction of the rotational axis O, it is the portion located near the intermediate position between both end portions than the inner end portion 691 and the outer end portion 692 of the flow leader 69).

Given this configuration in which the gate 68 and the flow leader 69 are disposed in the above-described manner, the resin injected into the gate 68 flows uniformly throughout the main plate 60, whereby the formability is improved.

Here, the flow leader 69 is a section formed as a rib 651 having a thickness t2. That is, the flow leader 69 is a section formed as a rib 651 having a larger thickness than the thickness t2 of the other portion (the thin portion 652), and also plays a significant role of improving the strength of the main plate 60.

As shown in FIGS. 5 and 7, viewed from the direction of the rotational axis O, each of the flow leaders 69 extends from the inner end portion 691 to the entire central portion in the blade length direction of the blade 70 closest to the corresponding gate 68 (to put it more explicitly, the portion overlapping with the center of gravity 70a and the outer peripheral portion of the first main-plate-side welding portion 8a and the second main-plate-side welding portion 8b). From a different perspective, that is, the flow leader 69 is radially formed in the main plate 60 so as to correspond to each of the plurality of blades 70, and the outer end portion 692 of the flow leader 69 is arranged so as to reach the central part (or the part on the extension line thereof) in the blade length direction of the portion where the blade 70 of the main plate 60 is disposed.

With each of the flow leaders 69 (rib 651) configured in such a manner, the wall from the vicinity of the outer periphery of the hub portion 61 to the center of gravity 70a of the blade 70 is configured to have the thickness t1 which is larger than the thickness (thickness t2) of the other portion (the thin portion 652) of the main plate 60.

As a result, the strength of the entire main plate 60 is enhanced. In particular, during the operation of the centrifugal fan 4, stress is assumed to occur in the portion of the main plate 60 that is continuous with a connecting portion with the blades 70 because a centrifugal force acts on the blades 70 that rotate in conjunction with the fan motor 7, which may result in cracks and damage at such a portion. In addition, it is conceivable that damage may also occur to this portion even when an impact is applied to the direction parallel to the rotational axis O at the time of an operation such as transportation.

In this regard, in the main plate 60, the portion overlapping the entire central part of the blade 70 (in particular, the portion overlapping with the center of gravity 70a), as viewed from the direction of the rotational axis O; that is, the portion where stress is assumed to largely occur during operation, is made larger in thickness than the other portions and therefore the strength of this portion is enhanced. Thus, damage to this portion is decreased when a load is applied during operation, transportation, etc. and enhancement in strength is achieved.

In addition, in the main plate 60, strength is enhanced only in a minimum part (a part where it is assumed that a stress largely occurs at the time of operation or the like) that requires strength enhancement. That is to say, from the viewpoint of enhancing the strength, the wall thickness of the portion which does not need to have a large thickness is configured to be small. With this configuration, the amount of resin used at the time of molding is decreased. In other words, the strength of the main plate 60 is enhanced while decreasing the amount of resin used for molding.

### (5) Characteristics

(5-1)
In the centrifugal fan 4 according to the above embodiment, the strength of the main plate 60 is enhanced and the reliability is improved while restraining an increase in cost.

That is, generally, when a centrifugal fan is in operation, a centrifugal force acts on a vane (blade) that rotates in conjunction with a motor causing a stress to be generated in a portion of the main plate that is continuous with a connecting portion with the vane. Given this situation, it is assumed that drawbacks such as cracks will occur and damage such portions. In addition, damage may also occur to this portion even in the case in which an impact is applied to the direction parallel to the rotation axis at the time of an operation such as transportation.

In this respect, in the conventional centrifugal fan, the wall thickness of the portion of the main plate overlapping the central part of the vane as viewed from the direction of the rotational axis is not configured to be particularly large compared with the thickness of the other portions. Thus, in the main plate, sufficient strength cannot be secured at the portion where stress is expected to be greatly generated during operation or the like. For this reason, when a load is applied during operation, transportation or the like, such a part may be damaged. In other words, according to the conventional centrifugal fan, the strength of the main plate is not sufficiently secured and the reliability is not sufficiently ensured.

On the other hand, increasing the thickness in a majority of the main plate for the purpose of enhancing the strength thereof increases the amount of resin used at the time of molding which leads to an increase in manufacturing cost of the centrifugal fan.

In the centrifugal fan 4 according to the above-described embodiment, each of the flow leaders 69 is configured so as to extend to the entire central part of the blade 70 closest to the corresponding gate 68 when viewed from the direction of the rotational axis O (specifically, the portion overlapping with the inner side than the outline of the blade 70 as viewed from the direction of the rotational axis O, particularly the portion overlapping with the center of gravity 70a of the blade 70 and the portion surrounding the center of gravity 70a of the blade 70). This configuration allows, in the main plate 60, the wall thickness (thickness t1) of the portion overlapping with the central part of the blade 70 as viewed from the direction of the rotational axis O to be configured larger than the wall thickness (thickness t2) of the other portions. As a result, the strength of the portion of the main plate 60 overlapping the central part of the blade 70 as viewed from the direction of the rotational axis O, which is where stress is assumed to largely occur during operation or the like, is enhanced. Thus, damage to such a portion is decreased when a load is applied during operation, transportation or the like.

Furthermore, in the main plate 60, enhancement to the strength is performed only to the portion where stress is assumed to largely occur during an operation or the like. That is, in view of the strength enhancement, with respect to the portion where it is not necessary to increase the wall thickness, the wall thickness thereof is reduced. With this configuration, the amount of resin used at the time of molding is restrained and an increase in cost is not incurred.

As a result, in the centrifugal fan 4 according to the above embodiment, the strength of the main plate 60 is enhanced and reliability is improved, while restraining an increase in cost.

(5-2)
In the centrifugal fan 4 according to the above-described embodiment, each of the flow leaders 69, together with the other flow leaders 69, extends from the inside of the main plate 60 toward the outside so as to exhibit a radial shape. In addition, as viewed from the direction of the rotational axis O, the gate 68 is disposed in the vicinity of the center of the corresponding flow leader 69 (to put it concretely, when viewed from the direction of the rotational axis O, it is the part located near the intermediate position between the inner end portion 691 and the outer end portion 692 than the inner end portion 691 or the outer end portion 692 of the flow leader 69).

This configuration allows the resin injected into the gate 68 to flow evenly throughout the flow leader 69 with ease, as compared with the case where the gates 68 are arranged outside near of the center of the flow leader 69. As a result, at the time of molding, the injected resin uniformly spreads over the main plate 60, whereby the formability is improved.

(5-3)
In the centrifugal fan 4 according to the above-described embodiment, each of the flow leaders 69 extends to a portion that overlaps with the center of gravity 70a of the blade 70 when viewed from the direction of the rotational axis O. With this configuration, in the main plate 60, the wall thickness of the portion overlapping with the center of gravity 70a of the blade 70 as viewed from the direction of the rotational axis O is configured to be larger than that of the other portions. As a result, the strength of the portion of the main plate 60 overlapping with the center of gravity 70a of the blade 70 as viewed from the direction of the rotational axis O, which is where stress is assumed to largely occur during an operation or the like, is enhanced. For this reason, when a load is applied during operation, transportation or the like, damage to such a portion is reduced.

In addition, in the main plate 60, enhancement to the strength is performed only to the portion where stress is assumed to largely occur during an operation or the like. Therefore, the amount of resin used during molding is particularly restrained.

(5-4)
The centrifugal fan 4 according to the above-described embodiment is a turbofan in which the ratio of the blade length of the blade 70 to the diameter of the main plate 60 viewed from the direction of the rotational axis O is larger than that of a sirocco fan. As a result, in the turbofan generally used in an air conditioner or the like, the strength of the main plate 60 is enhanced and the reliability is improved, while restraining an increase in cost.

(5-5)
The centrifugal fan 4 according to the above embodiment is adopted in the air conditioning indoor unit 1. As a result, the air-conditioning indoor unit 1 exhibits improvement in reliability while restraining an increase in cost.

### (6) Modified Examples

The above exemplary embodiment can be appropriately modified as described in the following modified examples. It should be noted that each modification may be combined with the other modifications and applied to the extent that no incompatibilities arise.

### (6-1) Modified Example A

In the above-described embodiment, the flow leader 69 was configured so as to extend over the entire central part of the blade 70 (specifically, the portion overlapping with the inner side than the outline of the blade 70 as viewed from the direction of the rotational axis O, particularly the portion overlapping with the center of gravity 70a of the blade 70 and the portion surrounding the center of gravity 70a of the blade 70). In this respect, according to the viewpoint of enhancing the strength of the entire portion of the main plate 60 overlapping with the central part of the blade 70 as viewed from the direction of the rotational axis O, which is where stress is assumed to largely occur during operation or the like, it is preferable that the flow leader 69 is disposed in such a manner.

However, according to the viewpoint of increasing the strength only in the portion where stress is assumed to particularly occur at large in the main plate 60 during an operation or the like, the flow leaders 69 are not necessarily configured to extend over the entire central part of the blade 70. That is to say, even if the flow leaders 69 do not extend over the entire central part of the blade 70, provided that the flow leaders 69 are configured to extend to a portion overlapping with the center of gravity 70a of the blade 70 when viewed from the direction of the rotational axis O, then the wall thickness of the portion overlapping with the center of gravity 70a of the blade 70 as viewed from the direction of the rotational axis O, which is where stress is assumed to largely occur during operation or the like, is formed to be larger than that of the other portions, and thereby enhancing the strength of this portion. In such a case, it is possible to enhance the strength of the main plate 60 only in the portion where stress is particularly expected to occur at large during an operation or the like and therefore making it possible to particularly restraining the amount of resin used at the time of molding.

### (6-2) Modified Example B

In the above-described embodiment, the gate 68 is disposed in the central part of the flow leader 69 (that is, in the vicinity of the center of the corresponding flow leader 69, specifically, when viewed from the direction of the rotational axis O, it is the part located near the intermediate position between the inner end portion 691 and the outer end portion 692 than the inner end portion 691 and the outer end portion 692 of the flow leader 69). In this regard, taking into account of making the resin injected into the gate 68 to flow uniformly throughout the flow leaders 69 with ease, it is preferable that the gate 68 be disposed near the center of the flow leader 69. However, according to the design specification and with the understanding that there is no considerable obstacle in the formality, the gate 68 is not necessarily disposed near the center of the flow leader 69, but may be disposed at other positions. In particular, the gate 68 is not necessarily disposed at a position overlapping with the flow leader 69 as viewed from the direction of the rotational axis O, and may be disposed at a position away from the flow leader 69 as viewed from the direction of the rotational axis O.

### (6-3) Modified Example C

In the above-described embodiment, a turbofan was adopted as the centrifugal fan 4. However, the centrifugal fan to which the technical idea according to the present invention can be applied is not necessarily limited to a turbofan. The technical idea according to the present invention is also applicable to, for example, sirocco fans.

### (6-4) Modified Example D

In the above-described embodiment, the number of the gates 68 and the flow leaders 69 is the same as the number of the blades 70. In other respects, the corresponding pair of gates 68 and flow leaders 69 corresponded to any one of the blades 70 on a one-to-one basis in the above-described embodiment. However, a configuration may be adopted in which the number of the gates 68 and the flow leaders 69 is not necessarily the same as the number of the blades 70 but a corresponding set of gates 68 and flow leaders 69 may be configured to correspond in a one-to-many basis with any of the blades 70 as long as enhancement to the strength is not hindered. Particularly, in the case of applying the technical idea according to the present invention to a sirocco fan having a larger number of blades as compared with a turbofan, it is preferable to be configured in such a manner in terms of feasibility.

### (6-5) Modified Example E

In the above-described embodiment, the main plate 60 and the blade 70, or the blade70 and the shroud 80 are separately molded and coupled to each other by being welded, whereby the impeller 8 of the centrifugal fan 4 is constructed. However, the impeller 8 is not necessarily configured in such a manner. A configuration may be adopted in which the main plate 60 and the blade 70, or the blade 70 and the shroud 80 are integrally formed at the time of molding. In this case, from the perspective of formability, it is preferable that the flow leader 69 is configured to have a wide width in a portion overlapping with the main-plate-side blade shaft end portion 71 as viewed from the direction of the rotational axis O.

### (6-6) Modified Example F

In the above-described embodiment, the blade 70 is formed having a hollow structure with the purpose of forming the space S therein. In this respect, it is preferable that the blade 70 is configured in such a manner from the viewpoint of weight reduction. However, from the perspective of enhancing the strength, the blade 70 does not necessarily have to be configured to be hollow, but may be configured to have a solid structure.

### (6-7) Modified Example G

In the above-described embodiment, the technical idea of the present invention is applied to the air conditioning indoor unit 1 (the indoor unit of an air conditioner), however the present invention is not limited thereto and is applicable to other "air conditioners" as well. For example, the technical idea of the present invention may be applied to apparatuses such as an outdoor unit of an air conditioner, an air purifier, a ventilator, a dehumidifier.

### (6-8) Modified Example H

In the above-described embodiment, the shroud protrusion 86 and the shroud flat surface 86a are provided at positions away from the shroud flat plate portion 82 on the counter-blade-side shroud surface 85. On the other hand, the shroud protrusion 86 and the shroud flat surface 86a may be provided at positions away from the shroud-side welding portion 8c and the shroud-side welding hole 8e in the shroud flat plate portion 82.

### (6-9) Modified Example I

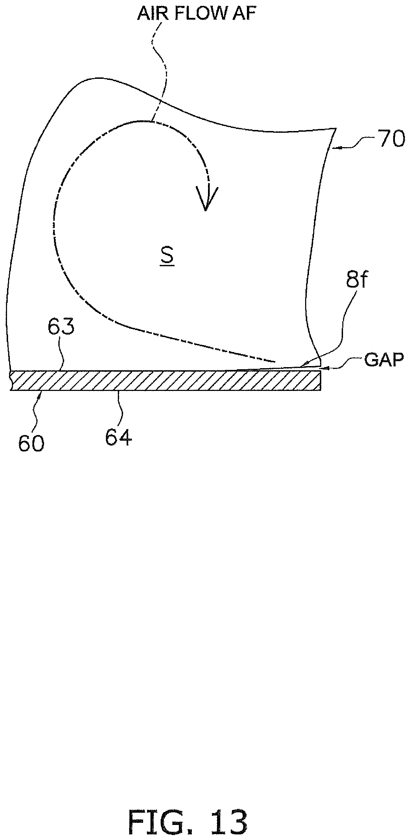

In the above-described embodiment, the effect of improving the formability and enhancing the strength of the main plate 60 has been realized. However, regarding noise reduction during operation, noise was not particularly specified, especially the noise generated in relation to the hollow blade 70. Here, in the centrifugal fan 4, in connection with the fact that the blade 70 has a hollow structure, for example, air flows into the space S in the blade 70 through a gap or the like formed between the non-welded portion 8f and the blade-side main plate surface 63 during operation. It is assumed that the air flowing into the space S in the blade 70 swirls in the space S as indicated by the two-dot chain line AF in FIG. 13, for example. In such a case, the blade main body 73 or the blade lid body 74 resonates with the flow of air swirling, and thus noise may be generated.

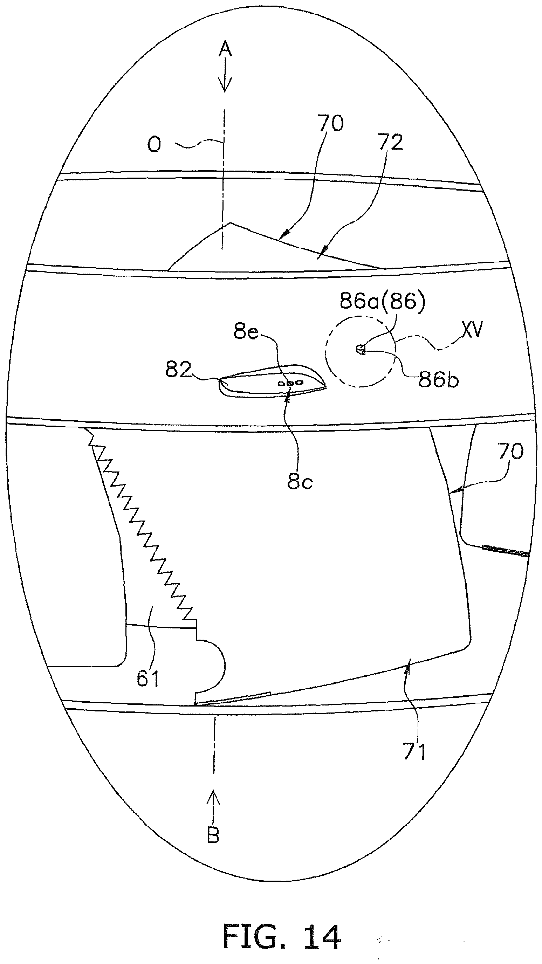

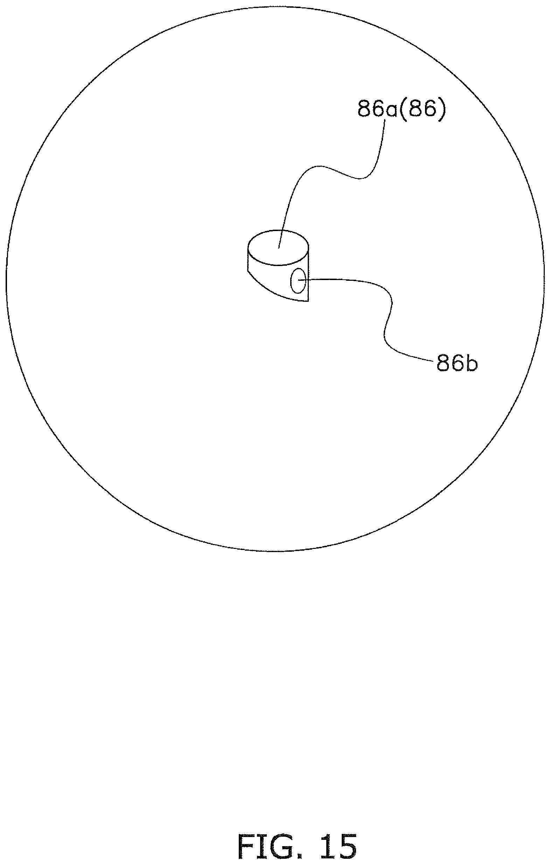

In this respect, forming an air vent hole in the blade main body 73 or the blade lid body 74 for the air flowing into the space S thereof has been conceived as a method of reducing the occurrence of such a situation. For example, as shown in FIGS. 14 and 15, it is conceivable to form a penetrating hole 86b penetrating the blade 70 in the shroud protrusion 86. Note that FIG. 14 is an enlarged view of a portion indicated by the two-dot chain line XIV in FIG. 3, and FIG. 15 is an enlarged view of a portion indicated by the two-dot chain line XV in FIG. 14.

This configuration in which the penetrating hole 86b is formed in such a manner allows the air flowing into the space S in the blade 70 to flow out from the penetrating hole 86b. That is, the penetrating hole 86b functions as an air vent hole for the air flowing into the space S. Given this configuration, swirling of the air in the space S is controlled and resonance of the blade main body 73 or the blade lid body 74 with the flow of the swirling air is also controlled. As a result, in the centrifugal fan 4, the effect of noise control is realized in addition to the effect of improving the formability and enhancing the strength of the main plate 60.

In regards to forming the air vent hole for the air flowing into the space S, it is to be noted that other air vent holes may be formed in addition to the penetrating hole 86b. In other words, in place of the penetrating hole 86b or in addition to the penetrating hole 86b, such an air vent hole may be formed in the impeller 8. In addition, the air vent hole is not necessarily formed in the shroud protrusion 86, but may be formed at another position (for example, a position away from the shroud-side welding portion 8c and the shroud-side welding hole 8e in the shroud flat plate portion 82).

### INDUSTRIAL APPLICABILITY

The present invention is applicable to a centrifugal fan and an air conditioner provided with the centrifugal fan.

### REFERENCE SIGNS LIST

- 1: air conditioning indoor unit (air conditioner)
- 2: casing
- 4: centrifugal fan
- 7: fan motor
- 8: impeller
- 8a: first main-plate-side welding portion
- 8b: second main-plate-side welding portion
- 8c: shroud-side welding portion
- 8d: main-plate-side welding hole
- 8e: shroud-side welding hole
- 8f: non-welded portion
- 60: main plate
- 61: hub portion
- 62: cooling air hole
- 63: blade-side main plate surface (main surface)
- 64: counter-blade-side main plate surface
- 67: main plate protrusion
- 68: gate
- 69: flow leader
- 70: blade (vane)
- 70a: center of gravity
- 71: main-plate-side blade shaft end portion
- 72: shroud-side blade shaft end portion
- 73: blade main body
- 74: blade lid body
- 75: main-plate-side blade hole
- 76: shroud side blade flat plate portion
- 77: blade stepped portion
- 80: shroud
- 81: shroud curved plate portion
- 82: shroud flat plate portion
- 83: shroud stepped portion
- 84: blade-side shroud surface
- 85: counter-blade-side shroud surface
- 86: shroud protrusion
- 86a: shroud flat surface
- 651: rib
- 652: thin portion
- 691: inner end portion
- 692: outer end portion
- C1: ceiling
- O: rotational axis
- SP1: target space

## Claims

1. A centrifugal fan (4) comprising:
a main plate (60) that is formed with resin and is configured and arranged annular viewed from a direction of a rotational axis (O); and
a plurality of vanes (70) coupled to a main plate surface (63) of the main plate and annularly arranged around the rotational axis (0); wherein
the main plate (60) is configured and arranged to include a plurality of gates (68) which are sections to be injected with resin at the time of molding, and
a plurality of flow leaders (69) which are sections configured and arranged to function as flow paths of resin injected into the corresponding gates (68),
**characterized in that** each of the flow leaders (69) is configured and arranged to extend from the corresponding gate (68) to a central part (70a) of the nearest vane as viewed from the direction of the rotational axis (0), and
the central part of the vane (70a) is a portion overlapping the center of gravity of the vane (70) as viewed from the direction of the rotational axis (0).

2. The centrifugal fan (4) according to claim 1, wherein each of the flow leaders (69) is configured and arranged to extend from the inside to the outside of the main plate (60) so as to exhibit a radial shape together with the other flow leaders (69), and the gate (68) is located near the center of the corresponding flow leader as viewed from the direction of the rotational axis (0).

3. The centrifugal fan (4) according to claim 1 or 2, is a turbofan wherein
a ratio of a vane length of the vane to a diameter of the main plate (60) viewed from the direction of the rotational axis (0) is larger than that of a sirocco fan.

4. An air conditioner (1) comprising the centrifugal fan (4) according to any one of claims 1 to 3.

## Patentansprüche

1. Zentrifugalgebläse (4), umfassend:
eine Hauptplatte (60), die mit Harz geformt ist, und aus einer Richtung einer Rotationsachse (0) aus gesehen, ringförmig konfiguriert und angeordnet ist; und
eine Vielzahl von Schaufeln (70), die mit einer Hauptplattenoberfläche (63) der Hauptplatte gekoppelt und ringförmig um die Rotationsachse (0) angeordnet ist; wobei
die Hauptplatte (60) konfiguriert und angeordnet ist, um eine Vielzahl von Anschnitten (68) einzuschließen, die Teilabschnitte sind, die zum Zeitpunkt des Gießens mit Harz injiziert werden sollen, und
eine Vielzahl von Flussleitern (69), die Teilabschnitte sind, die konfiguriert und angeordnet sind, um als Flusswege für das in die entsprechenden Anschnitte (68) injizierte Harz zu dienen,
**dadurch gekennzeichnet, dass** jeder der Flussleiter (69) konfiguriert und angeordnet ist, um sich von dem entsprechenden Anschnitt (68) zu einem zentralen Teil (70a) der nächstgelegenen Schaufel, aus der Richtung der Rotationsachse (0) aus gesehen, zu erstrecken, und
der zentrale Teil der Schaufel (70a) ein Abschnitt ist, der den Gewichtsschwerpunkt der Schaufel (70), aus der Richtung der Rotationsachse (0) gesehen, überlappt.

2. Zentrifugalgebläse (4) nach Anspruch 1, wobei jeder der Flussleiter (69) konfiguriert und angeordnet ist, um sich von der Innenseite zur Außenseite der Hauptplatte (60) zu erstrecken, so dass er zusammen mit den anderen Flussleitern (69) eine radiale Form aufweist, und wobei der Anschnitt (68) in der Nähe des Zentrums des entsprechenden Flussleiters, aus der Richtung der Rotationsachse (0) aus gesehen, angeordnet ist.

3. Zentrifugalgebläse (4) nach Anspruch 1 oder 2, das ein Mantelstromgebläse ist, wobei
ein Verhältnis einer Schaufellänge der Schaufel zu einem Durchmesser der Hauptplatte (60), aus der Richtung der Rotationsachse (0) gesehen, größer ist als das eines Sirocco-Gebläses.

4. Klimaanlage (1), umfassend das Zentrifugalgebläse (4) nach einem der Ansprüche 1 bis 3.

## Revendications

1. Ventilateur centrifuge (4) comprenant :
une plaque principale (60) qui est formée de résine et est configurée et agencée de manière annulaire, vue selon la direction d'un axe de rotation (0) ; et
une pluralité de pales (70) couplée à une surface (63) de plaque principale de la plaque principale et agencée de manière annulaire autour de l'axe de rotation (0) ; dans lequel
la plaque principale (60) est configurée et agencée pour comporter une pluralité d'entrées (68) qui sont des sections dans lesquelles de la résine est injectée au moment du moulage, et
une pluralité de conducteurs d'écoulement (69) qui sont des sections configurées et agencées pour fonctionner comme des chemins d'écoulement de résine injectée dans les entrées (68) correspondantes,
**caractérisé en ce que** chacun des conducteurs d'écoulement (69) est configuré et agencé pour s'étendre depuis l'entrée (68) correspondante jusqu'à une partie centrale (70a) de la pale la plus proche telle que vue selon la direction de l'axe de rotation (0) et
la partie centrale de la pale (70a) est une portion qui chevauche le centre de gravité de la pale (70) telle que vue selon la direction de l'axe de rotation (0).

2. Ventilateur centrifuge (4) selon la revendication 1, dans lequel chacun des conducteurs d'écoulement (69) est configuré et agencé pour s'étendre depuis l'intérieur de la plaque principale (60) vers l'extérieur de celle-ci de manière à présenter une forme radiale avec les autres conducteurs d'écoulement (69), et l'entrée (68) est située à proximité du centre du conducteur d'écoulement correspondant tel que vu selon la direction de l'axe de rotation (0).

3. Ventilateur centrifuge (4) selon la revendication 1 ou la revendication 2, qui est un turboventilateur dans lequel
un rapport entre une longueur de pale de la pale et un diamètre de la plaque principale (60) vue selon la direction de l'axe de rotation (0) est plus grand que celui d'un ventilateur sirocco.

4. Climatiseur (1) comprenant le ventilateur centrifuge (4) selon l'une quelconque des revendications 1 à 3.
